# EUROPEAN PATENT APPLICATION

(11) **EP 4 009 253 A1**
(43) Date of publication of application: **08.06.2022**
(21) Application number: 21020219.8
(22) Date of filing: 20.04.2021
(51) Int. Cl.: G06Q 10/00

(54) **IT SYSTEM FOR STORING AND MANAGING INFORMATION RELATING TO PLEASURE VESSELS**

(30) Priority: 02.12.2020 IT 202000029348
(71) Applicant: Boost Marine Srl, 73057 Taviano (LE) (IT)
(72) Inventor: Barone, Matteo, 73057 Taviano (LE) (IT)
(74) Representative: Cornacchia, Pierluigi

(57) **Abstract**

The present invention refers to the general field of information managing software relating to vessels, regarding both the requests promoted by owners/shipowners and the managing of information required by shipyards during maintenance and repair periods.

More precisely, the invention consists in the development of a method that employs a database on a server and a tool for a web application that provides an internet-based managing, by means of which users will be allowed to obtain and consult at whatever time the history of maintenance operations implemented on vessels in shipyards, together with transfers of ownership to new shipyards as well as to new owners.

## Description

The present invention refers to the general field of information managing software relating to vessels, regarding both the requests promoted by owners/shipowners and the managing of information required by shipyards during maintenance and repair periods.

More precisely, the invention consists in the development of a method that employs a database on a server and a tool for a web application that provides an internet-based managing, by means of which users will be allowed to obtain and consult at whatever time the history of maintenance operations implemented on vessels in shipyards, together with transfers of ownership to new shipyards as well as to new owners.

Although some managing methods for vessels (i.e. yachts, ships, etc.) use web browsers to consult filed data or aggregated data from other systems, in the browser's perspective these operations normally belong to read-only proceedings or consist in aggregated data transmission from one operator to another thanks to either contractual obligations or to cooperation agreements of the corporate type between shipyards that belong to the same ownership. Other systems contemplate the use of web servers for the storage and transmission of data, which however engage temporary systems that do not prevent the loss of said data after the transfer of ownership of the vessel. Therefore, it is clear how this situation could be an inconvenience for the new owner of the vessel, since, by the moment of the purchase of the asset, any information regarding former owners as well as previous reparations or replacements possibly endured by the engine and/or other parts of the vessel will not be furtherly available.

The software system at issue is able to digitally file each transfer of ownership relating the vessel in its database. More specifically, the shipyards exchange, or better share, the data real time. The owners benefit from the data thanks to the transfer of the digital ownership of the information concerning to the vessel.

The operations relating to the transfer of the vessel within the visibility area of a new shipyard or to the change of user are carried out by a platform administrator.

In the first case, the new shipyard will be entitled to revise the history of the maintenance operations carried out on the vessel in the previous shipyards and engage new ones.

In case of a transfer of ownership, on the other hand, the former owner will be denied further access to the information on the vessel previously owned, transmitting the new user the faculty of viewing the vessel's history and request interventions to the designated shipyard.

The software is therefore able to file each historical data regarding the maintenance of the vessel throughout time.

Each intervention contains the following information:
- the type of processing;
- the shipyard that took over and completed the work;
- one or more shipyard workers who actually carried out the repairs on the boat;
- the hours worked by the workers;
- any notes accompanying each individual process

The repairs are saved within the platform's database and appointed to a specific ship, saving a request date and delivery date.

The object of the present invention is to create a browser and an application that can be used by the owner of the vessel and the shipyards, as so to elaborate the historical data relating the shit more easily.

This system would produce the benefit of a more transparent market of private transactions concerning vessels as well as facilitated maintenance activity for the shipyards that could directly access a sort of maintenance digital record book.

### Brief description of the drawings

Further features and benefits of the invention will appear more evident in light of a detailed description of preferred embodiment, the whole by way of example and not limited to, and with the support of the attached drawings, about which:

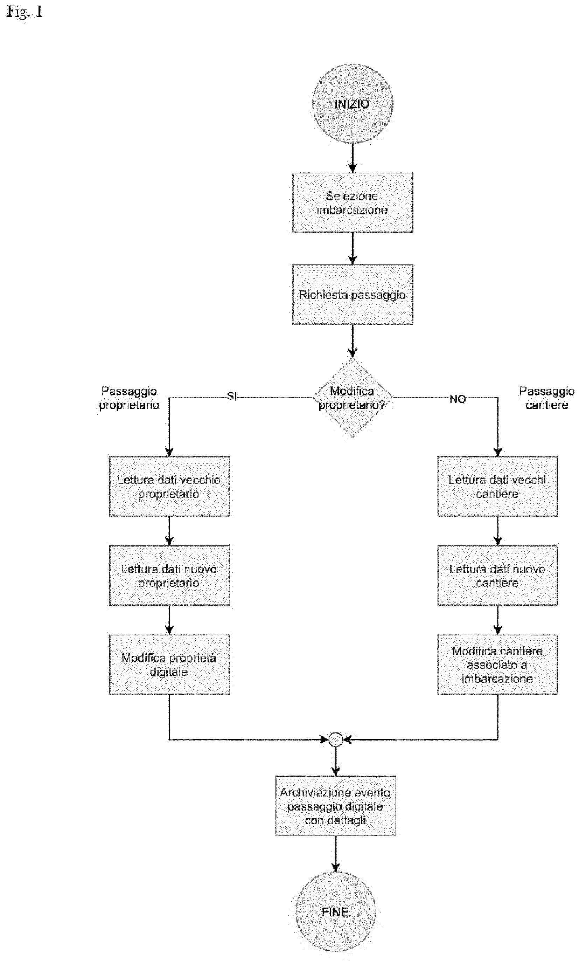

Fig. 1 represents a flow chart displaying a preferred embodiment of the system object of the present invention;
Fig. 2 represents a flow chart regarding the digitalization of the history of repairs carried out on the vessel.

### Detailed description of a preferred embodiment of the invention

According to the present invention, the managing method of (at least) one vessel is realized by means of a hardware and software platform comprising an application that can be downloaded and installed on a smartphone of the owner/shipowner of the vessel and a program that can be installed on a desktop PC or tablet used by one or more shipyards for maintenance and repair processing.

As a matter of common knowledge, smartphones are provided with data connection, a display and an operating system that allows to customise the item's functionality by means of installation of applications.

According to the present invention, users will real time be allowed to access both maintenance and repair processing previously and currently carried out on the ship.

Consequently, the desktop PC or tablet used by the shipyard updates real time the status of the vessel on which the maintenance/repair is being carried out and by updating its own software it also automatically updates the owner's application.

According to a preferred embodiment of the invention, the desktop PC or the tablet calculates the processing's schedule of a specific worker, in order to elaborate the repairing timing and estimate a date for the conclusion of the operation.

Each piece of information regarding ordinary and extraordinary maintenance is saved both on the desktop PC or tablet and on the vessel owner's smartphone.

All the information will be accessible on the website of the service provider by means of credentials that will grant the access.

In that case information will also be saved on a remote server.

As a result, on the remote server memory a multitude of data will be saved by means of desktop PC and tablet of the shipyards that adopt the same system: more specifically, data will concern the type the type of processing; the shipyard that took over and completed the work; one or more shipyard workers who 10 actually carried out the repairs on the boat; the hours worked by the workers; the cost and payment of the intervention and any notes accompanying each individual process also with reference to any spare parts used.

Preferably, a guided procedure can allow to real time complete the procedure for the fulfilment of the maintenance and restoration of the vessel during its stay at the shipyard by contacting the shipyards' platform through the smartphone.

Therefore, each of the phases relating to maintenance and restoration of the vessel, together with the processing's schedule and potential conclusion, will be displayed on the owner/shipowner's smartphone, by means of notifications. Furthermore, a summary will also be available on screen containing a summary of the necessary processing and also potential replacements of damaged or malfunctioning elements of the ship.

Preferably, the application could request the payment of the entire or part of the processing cost.

Figure n. 1 shows an example of a preferred chart indicating the potential implementation steps of the invention from the vessel's owner/shipowner's perspective. Once the download is completed and the user has logged for the first time, the application asks whether a transfer of ownership has occurred.

The system proceeds according to the answer: if the feedback is positive, the digital ownership data will be modified; on the contrary, if the feedback is negative, the application immediately provides the data from the previous shipyards and asks to the new owner/shipowner whether the are updates to be saved and associated to the new digital ownership.

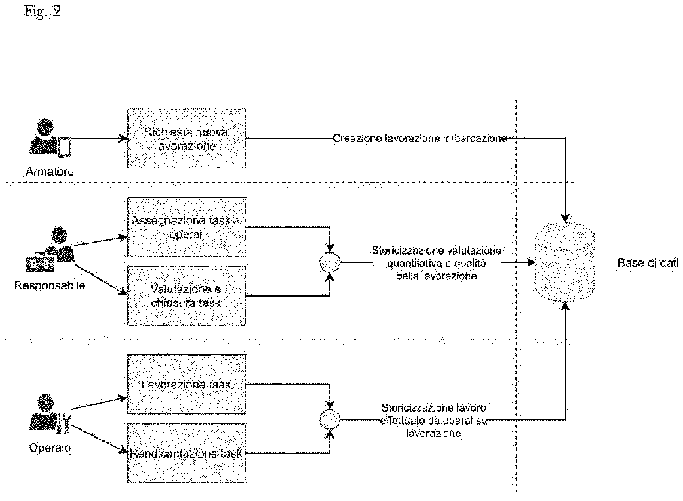

Figure 2 shows a preferred chart indicating precisely the operating procedures of the system regarding the owner/shipowner and shipyard interaction.

It is in fact noticeable that the former can file a request for a new processing to the latter by opening a "vessel processing" report. Once availability is confirmed, the shipyard takes over the vessel and appoints all the necessary tasks to the workers, including the related date for the evaluation and conclusion of the task.

The shipyard in turn indicates the specialised workers, that will proceed with the interventions and the reporting of the tasks. All the data regarding the people involved converge n a database that is respectively composed by: a) the dossier creation by the owner/shipowner's input; b) the history and quantitative and qualitative evaluation of the processing by the shipyard's manager; c) the history of the tasks' processing and relating reporting by the shipyard's workers.

The features and elements displayed in the preferred embodiments can be combined while remaining in the protection field of the patent.

## Claims

1. Method of managing information relating to vessels by means of a software platform comprising an application that can be downloaded and installed on a smartphone of the owner/shipowner of the vessel and a program that can be installed on a desktop PC or tablet used by one or more shipyards and by a shipyard manager and by their workers.

2. Method of managing information relating to vessels according to the previous claim including the execution of the following steps by the owner/shipowner (Fig. 1):
- log in and set up of the application linking it to the registered vessel;
- in the event that the association between the owner/shipowner and the vessel occurs for the first time and is subsequent to the purchase of a used vessel, the owner will request the system to read the data of the old owner so that the system will proceed with the modification of digital ownership;
- if there has been no transfer of ownership, the owner/shipowner will view his own historical data of the maintenance carried out on the vessel (if any) and may also associate new shipyards;

3. Method of managing information relating to vessels according to the previous claims including the execution of the following steps by the parties involved, i.e. the owner/shipowner; the shipyard manager and his workers (Fig. 2):
- Sending the maintenance/repair request by the shipowner/owner;
- Confirmation of the taking charge of the work by the shipyard manager who assigns the various tasks to the workers by also entering a likely deadline for the evaluation and closure of the tasks;
- Receipt of tasks by the worker on their device or tablet of the shipyard and subsequent processing and reporting of the tasks;

4. Method for managing information relating to vessels according to the preceding claims **characterized by** a data base comprising by way of example but not limited to: the type of processing; the shipyard that took over and completed the work; one or more shipyard workers who actually carried out the repairs on the boat; the hours worked by the workers; the cost and payment of the intervention and any notes accompanying each individual process also with reference to any spare parts used;

5. Method of managing information relating to vessels according to the preceding claims **characterized by** the fact that the operations relating to the transfer of the boat within the visibility area of a new shipyard or to the change of user are carried out by a platform administrator;

6. Software/hardware platform comprising - a smartphone upon which an application is downloaded and installed, a fixed computer or tablet and a remote server set up to allow all the steps of any one of claims 1 to 5 to be performed.
